# EUROPEAN PATENT APPLICATION

(11) **EP 4 015 479 A1**
(43) Date of publication of application: **22.06.2022**
(21) Application number: 20020633.2
(22) Date of filing: 18.12.2020
(51) Int. Cl.: C04B 7/46, C04B 7/44

(54) **METHOD OF CALCINING A RAW MATERIAL TO OBTAIN A CEMENTITIOUS MATERIAL**

(71) Applicant: Holcim Technology Ltd, 6300 Zug (CH)
(72) Inventor: STOFFEL, Beat, CH-5113 Holderbank (CH); BUCHER, Ernst, CH-5113 Holderbank (CH); BOES, Karl-Heinz, CH-5113 Holderbank (CH); WEBER, Mirko, CH-5113 Holderbank (CH)
(74) Representative: Keschmann, Marc

(57) **Abstract**

A method of calcining a raw material to obtain a cementitious material, comprising the steps of:
- providing a flow of raw material containing a metal carbonate, such as CaCO₃ to a calcination system,
- introducing the flow of raw material into a first thermal reactor and at least partially decarbonating the raw material in the first thermal reactor by subjecting the raw material to a first heat treatment at a first temperature of at least 650°C in order to obtain an at least partly decarbonated material and CO₂, wherein the first thermal reactor is heated by electrical energy,
- obtaining the cementitious material as a result of the first heat treatment.

## Description

The invention relates to a method of calcining a raw material to obtain a cementitious material.

Cementitious materials are one of the principal ingredients of a concrete mixture. There are two types of cementitious materials: hydraulic cement and supplementary cementitious materials (SCMs). Hydraulic cements set and harden by reacting chemically with water, which is called hydration. Portland cement is the most common hydraulic cement. SCMs are used in conjunction with Portland cement in concrete mixtures. In particular, it has become common practice to use pozzolanic and/or latent hydraulic material as supplementary cementitious materials in Portland cement mixtures.

By substituting supplementary cementitious materials for Portland cement the specific emission of CO₂ in the production of cement will be reduced. Supplementary cementitious materials comprise a broad class of siliceous or siliceous and aluminous materials which, in finely divided form and in the presence of water, chemically react with calcium hydroxide at ordinary temperature to form compounds possessing cementitious properties. Examples of supplementary cementitious materials include granulated blast-furnace slag, fly ash, natural pozzolans, burnt oil shale, or calcined clay.

In known processes for producing cement clinker, raw material is fed into a rotary kiln after it has been preheated and partially decarbonated in a multistage preheater system by using the heat of combustion gases exhausted from the rotary kiln. The preheated raw material is fed into the rotary kiln via the kiln inlet and travels to the kiln outlet while being calcined at temperatures of up to 1400°C.

Carbon dioxide (CO₂) is the most significant long-lived greenhouse gas in the Earth's atmosphere. The use of fossil fuels and deforestation have rapidly increased its concentration in the atmosphere, leading to global warming. Carbon dioxide also causes ocean acidification, because it dissolves in water to form carbonic acid.

The cement industry is an important emitter of CO₂. Within the cement production process, significant amounts of CO₂ are generated during the decarbonation of raw meal (containing CaCO₃) to lime (CaO). During the production of Portland cement clinker about 0,9 tons of CO₂ per ton of Portland cement clinker are emitted by the calcination of the raw materials and from the fuel combustion in the rotary kiln.

The use of alternative fuels, in particular renewable fuels, in the rotary kiln burner may reduce the amounts of greenhouse gases. However, substantial amounts of CO₂ are still produced by the decarbonation of raw meal and emitted into the atmosphere.

It has been proposed to use carbon capture and sequestration methods in order to reduce or prevent the emission of CO₂ from industrial processes into the atmosphere. Such methods comprise capturing CO₂ from flue gases for storage or for use in other industrial applications. However, such methods require the separation of CO₂ form the flue gases, wherein respective separation plants involve high capital and operating expenditures.

Therefore, the instant invention aims at further reducing the CO₂ footprint of a cement plant in a more efficient way.

In order to solve these objectives, the invention provides a method of calcining a raw material to obtain a cementitious material, comprising the steps of:
- providing a flow of raw material containing a metal carbonate, such as CaCO₃ to a calcination system,
- introducing the flow of raw material into a first thermal reactor and at least partially decarbonating the raw material in the first thermal reactor by subjecting the raw material to a first heat treatment at a first temperature of at least 650°C in order to obtain an at least partly decarbonated material and CO₂, wherein the first thermal reactor is heated by electrical energy,
- optionally introducing the at least partly decarbonated material into a second thermal reactor and subjecting the at least partly decarbonated material to a second heat treatment at a second temperature lying above the first temperature,
- obtaining the cementitious material as a result of the first and optionally the second heat treatment.

The invention is based on the idea to use electrical energy to decarbonize raw material instead of burning fossil fuels. The process of the present invention enables an efficient use of electrical energy for the production of cementitious materials, and reduces the use of fossil fuels and other alternative fuels which are traditionally used in the cement process. This enables the reduction of the CO₂ footprint of the production of cementitious material, as electricity has a lower CO₂ footprint than fossil or alternative fuels.

Since the heat that is required to decarbonize raw material is generated by the use of electrical energy in the calcination device, the combustion of fuel, such as fossil fuel, in the calcination device can be eliminated.

Another advantage of the invention is that the exhaust gas from the thermal reactor, where no fuel is burnt, is substantially pure CO₂, so that the process operates without the requirement to separate CO₂ from flue gases. Rather, the exhaust gas (CO₂) drawn off from the thermal reactor may directly be used in a CO₂ processing or sequestration unit.

According to the invention, the entire flow of raw material is subjected to the first heat treatment in the first thermal reactor. Therefore, in the first heat treatment the raw material is not treated by burning a fuel, such as fossil fuels.

In the first thermal reactor the raw material is subjected to a first heat treatment at a first temperature of at least 650°C in order to obtain an at least partly decarbonated material and CO₂, wherein the first thermal reactor is heated by electrical energy. Preferably, the raw material is heated to a temperature of 650-900°C, preferably 800-900° in the first thermal reactor. In this way, the temperature within the first thermal reactor is selected in order to specifically decarbonate a limestone component within the raw material. This enables the production of an exhaust gas that is rich in CO₂ which can later be captured and either used as a raw material for the production of synthetic fuel or plastic components, or sequestrated.

Optionally, the raw material is calcined in two subsequent steps, wherein the second step comprises introducing the at least partly decarbonated material into a second thermal reactor and subjecting the at least partly decarbonated material to a second heat treatment at a second temperature lying above the first temperature. The second thermal reactor may also be heated by electrical energy. Alternatively, the second thermal reactor may be heated by burning alternative fuels or by other means.

Heating the first and optionally the second thermal reactor by electrical energy means that the thermal energy needed for the heat treatment is obtained by transforming electrical energy into thermal energy. Various forms of electrical energy conversion may be applied, such as electrical resistance heating, microwave heating, induction heating, ultrasound heating and plasma torch heating.

The heat transfer to the raw material may be performed by thermal conduction (establishing contact of the raw material with a heating surface), convection (using a heated gas to transfer the heat to the raw material) or radiation (e.g. using a plasma torch) or any combination of these heat transfer methods.

Various types of thermal reactors may be suitable for conducting the first and/or second heat treatment by use of electrical energy. The first and/or second thermal reactor may be a rotary kiln that is optionally equipped with lifting and transporting elements, or a reactor with a rotating screw or transport elements inside, or a flash reactor or fluidized bed reactor.

In preferred embodiments of the thermal reactor, the raw material is transported from a raw material inlet to the raw material outlet of the thermal reactor while being heated. In particular, conveying means may be provided for transporting raw material from the raw material inlet to the raw material outlet of the reactor while being heated, in order to achieve an efficient energy transfer to the raw material.

The electrical heating means may be configured to provide indirect heating of the raw material. For example, a solid heat transfer medium is heated by electrical energy, which is contacted with the raw material in order to transfer thermal energy to the raw material by thermal conduction.

Preferably, the thermal reactor comprises at least one contact heating element that is arranged to be in heat exchanging contact with the raw material while the same is being conveyed from the inlet to the outlet, wherein said at least one contact heating element is configured to be heated by electrical energy.

According to a preferred embodiment, the raw material is transported through the thermal reactor by means of a screw conveyor while being at least partially decarbonated. A screw conveyor is characterised by a direct contact between the raw material and the conveying means, i.e. the conveyor screw of the screw conveyor, wherein a large surface area is provided for transferring heat to the raw material.

A screw conveyor is understood to be a mechanism that uses a rotating helical screw blade, the conveyor screw, arranged within a tube, to move the raw meal along the rotation axis of the screw from an inlet to an outlet of the conveyor.

Preferably, a conveyor screw of the screw conveyor is configured as a heating element that is heated by electrical energy, such as by resistance heating.

In particular, an electrically heated screw conveyor as described in WO 2019/228696 may be used.

The electrical heating options described above may be used to heat the first thermal reactor and the second thermal reactor. Alternatively, the electrical heating options described above may be used to heat the first thermal reactor only. In this case, the second thermal reactor is heated by combusting a renewable fuel and/or by combusting hydrogen. The term "renewable fuel" is understood to mean fuels that originate from renewable sources or are produced from renewable resources, such as biofuels (e.g. vegetable oil, biomass, and biodiesel). This is in contrast to non-renewable fuels such as natural gas, LPG (propane), petroleum and other fossil fuels.

The CO₂ draw off from the first and/or second thermal reactor may be processed in various ways. It may be used as a raw material for the production of synthetic fuel or plastic components, or it may be sequestrated. It can be stored in different ways, such as, e.g., in stable carbonate mineral forms. The respective process is known as "carbon sequestration by mineral carbonation". The process involves reacting carbon dioxide with a carbonatable solid material, said material comprising metal oxides, in particular magnesium oxide (MgO) or calcium oxide (CaO), to form stable carbonates.

Alternatively, it is also possible to convert the CO₂ into a synthetic fuel by adding H₂. The synthetic fuel may be used in many ways, e.g. as an alternative fuel for the burner of the second thermal reactor. In this way, an additional decrease of the CO₂ footprint of the clinker production process is achieved. Alternatively, the synthetic fuel may be used as a fuel for other industries, e.g. as renewable aviation fuel.

The CO₂ or the CO₂ rich exhaust gas produced in the first and/or second thermal reactor has a temperature of approximately 650 to 1,400°C so that its thermal energy can be recycled before further processing the CO₂. In this connection, a preferred embodiment provides that the CO₂ drawn off from the calcination device is fed through a heat exchanger, in which a fluid or gaseous medium is heated by heat exchange with the CO₂.

The sensible heat of the CO₂ or of the CO₂ rich exhaust gas may also be used to preheat the raw material before introducing it into the first thermal reactor. Therefore, according to a preferred embodiment, the flow of raw material is preheated before being introduced into the first thermal reactor, wherein preheating is carried out by bringing a heat exchanging fluid into a heat exchanging relationship with the raw material, while the heat exchanging fluid is cooled. As used herein, a heat exchanging fluid may be a liquid or a gas.

Use of the sensible heat of the CO₂ or of the CO₂ rich exhaust gas to preheat the raw material may be direct or indirect. For the direct use of the sensible heat, a preferred embodiment of the invention provides that an exhaust gas is withdrawn from the first thermal reactor, said exhaust gas preferably containing at least 80 vol.% CO₂, and said exhaust gas is used as said heat exchanging fluid to preheat the raw material. Preferably, preheating the raw material comprises introducing the exhaust gas into a heat exchanger and preheating the raw material in said heat exchanger.

For the indirect use of the sensible heat, a preferred embodiment of the invention provides that an exhaust gas is withdrawn from the first thermal reactor, said exhaust gas preferably containing at least 80 vol.% CO₂, and the heat exchanging fluid is heated by bringing the exhaust gas into a heat exchanging relationship with the heat exchanging fluid, while the exhaust gas is cooled, and the heat exchanging fluid is brought into a heat exchanging relationship with the raw material to preheat the latter.

According to another preferred embodiment, the thermal efficiency of the method of the invention may be increased by recovering the heat of the cementitious material and using the recovered heat as an additional source of thermal energy in the first and/or second thermal reactor. The excess heat recovered from the cementitious material can be recirculated to the first and/or second thermal reactor either by circulating hot gases, or by indirect heating using a heat transporting fluid. In particular, the exhaust gas or the heat exchanging fluid that has been cooled for preheating the raw material can be used as the carrier medium for the recovered heat.

Therefore, the cementitious material is preferably introduced into a cooling device, in which the cooled exhaust gas or the cooled heat exchanging fluid is used to cool the cementitious material, while the cooled exhaust gas or the cooled heat exchanging fluid is re-heated.

The re-heated exhaust gas or heat exchanging fluid that is withdrawn from the cooling device may preferably be used to provide thermal energy to the first or second heat treatment, preferably by introducing the re-heated exhaust gas or heat exchanging fluid into the first or second thermal reactor.

To increase the thermal energy that is provided to the first or second thermal reactor by the re-heated exhaust gas or the re-heated heat exchange fluid, the temperature thereof may be raised by additional heating. To this end, the method of the invention may preferably be carried out so that the re-heated exhaust gas or heat exchanging fluid that is withdrawn from the cooling device is heated before being used for providing thermal energy to the first or second thermal reactor.

In an embodiment, in which the raw material is first heat treated in the first thermal reactor and then in the second thermal reactor, the re-heated exhaust gas or heat exchanging fluid can be used in counter-current flow to the raw material. According to a preferred embodiment, the re-heated exhaust gas or heat exchanging fluid that is withdrawn from the cooling device is introduced into the second thermal reactor to provide thermal energy to the second heat treatment and wherein the exhaust gas or heat exchanging fluid is withdrawn from the second thermal reactor and introduced into the first thermal reactor to provide thermal energy to the first heat treatment.

Again, additional heat may be provided, if the exhaust gas or heat exchanging fluid that is withdrawn from the second thermal reactor is heated before being introduced into the first thermal reactor.

Preferably, the heating of the exhaust gas or the heat exchanging fluid gas is performed by means of a heating device that transforms electrical energy into thermal energy.

Different kinds of raw material may be used in the method of the invention. In order to produce Portland clinker, traditional cement raw meal may be used. Cement raw meal is a material mix containing lime, silica, alumina and ferric oxide and is sourced from limestone, clay, marl and shale. In order to obtain Portland clinker, the raw material will have to be subjected to the first heat treatment in the first thermal reactor and subsequently to the second heat treatment in the second thermal reactor, in which the material is calcined at a temperature of around 1,400-1,450°C.

The raw material may be provided in solid, dry form or as a slurry. In case of a solid dry material, it may be pre-treated by mechanical processes that include crushing or milling and homogenisation to produce a raw meal. In case the raw material is a slurry with a relative high amount of water, the slurry can be additionally pre-treated so as to remove excess water. Waste heat from the first or second thermal reactor can for example be used to evaporate this excess water.

The atmosphere in the first and/or second thermal reactor can be adjusted by adjusting the addition of CO₂ and/or O₂. The O₂, which is important for the product quality and colour of the product, can be adjusted in the reactor by controlling CO₂/O₂ recirculation or adding the amount of O₂ in case of a hydrogen O₂ burner.

To sum up, the main advantages of using electric heating for the first and/or second heat treatment of the raw material are as follows:
- No CO₂ generation by burning fuels. Use of renewable energy (wind, solar power) may even lead to zero CO₂ emissions of the entire process chain.
- Significantly less (more than 80-90%) gases from combustion are emitted during the calcination.
- The gases produced from the calcination and decarbonation of the raw materials have a high concentration in CO₂, meaning between 80-90% of the emitted gas, compared to 15-35% in fuel fired processes, which can be recuperated and used. These gases can be collected for making use of CO₂ as a byproduct.
- No NOx generation.
- No entry of harmful substances via (alternative) fuels such as Cl, SO₂, etc.
- Huge intensity of heat in a small volume allows fast and complete calcination.

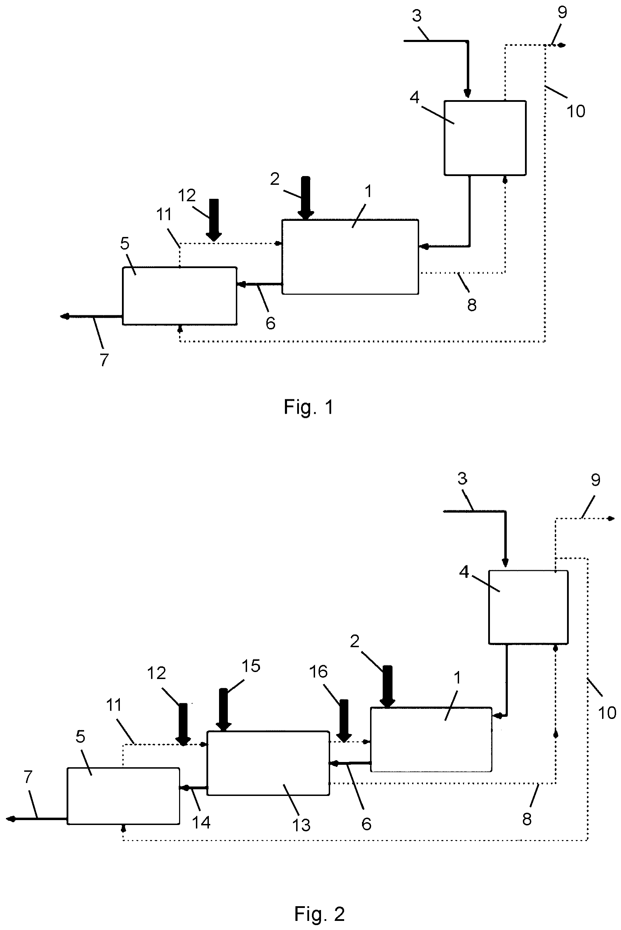

The invention will now be described in more detail with reference to the attached drawings. Fig. 1 is a schematic illustration of a first embodiment of a calcination system and Fig. 2 is a schematic illustration of a second embodiment of a calcination system.

In Fig. 1 a first thermal reactor 1 is shown that is heated by electrical energy 2. The first thermal reactor is fed by raw material 3 that is first preheated in a preheater 4. Raw material is subjected to heat treatment in said first thermal reactor 1 to obtain a cementitious material that is extracted from the first thermal reactor 1 and conveyed to a cooling device 5 via line 6. The final cementitious product is obtained at 7.

As a result of the decarbonation of the raw material within the first thermal reactor 1, CO₂ is produced so that a CO₂ rich exhaust gas is withdrawn from the first thermal reactor 1 via line 8 and used in the preheater 4 to preheat the raw material 3. The CO₂ rich exhaust gas may contain > 80 vol.-% CO₂, preferably > 90 vol.-% CO₂. The exhaust gas that has been cooled in the preheater can be deployed at 9 and/or recirculated via recirculation line 10. The recirculated exhaust gas is used in the cooling device 5 as a cooling fluid for cooling the cementitious material that comes from the first thermal reactor 1. By being in heat exchanging relationship with the cementitious material, the exhaust gas is re-heated wherein said heat can be recovered by introducing the re-heated exhaust gas into the first thermal reactor via line 11. Additional heat can be introduced by heating the exhaust gas by means of electrical energy 12.

In the alternative embodiment of Fig. 2 same reference numerals are used for the same components as in Fig. 1. In Fig. 2 a second thermal reactor 13 is provided that is used to provide a second heat treatment to the raw material that has already been subjected to the first heat treatment in the first thermal reactor 1. The cementitious material that is discharged from the second thermal reactor is fed to the cooling device via the line 14. The second thermal reactor 13 is heated by electric energy 15. Further, the recirculated exhaust gas that is re-heated in the cooling device 5 is first introduced into the second thermal reactor 13 via the line 11 and then introduced into the first thermal reactor 1. Before being introduced into the first thermal reactor 1, the exhaust gas may be subjected to an optional heating step 16.

## Claims

1. A method of calcining a raw material to obtain a cementitious material, comprising the steps of:
- providing a flow of raw material containing a metal carbonate, such as CaCO₃ to a calcination system,
- introducing the flow of raw material into a first thermal reactor and at least partially decarbonating the raw material in the first thermal reactor by subjecting the raw material to a first heat treatment at a first temperature of at least 650°C in order to obtain an at least partly decarbonated material and CO₂, wherein the first thermal reactor is heated by electrical energy,
- optionally introducing the at least partly decarbonated material into a second thermal reactor and subjecting the at least partly decarbonated material to a second heat treatment at a second temperature lying above the first temperature,
- obtaining the cementitious material as a result of the first and optionally the second heat treatment.

2. Method according to claim 1, wherein the flow of raw material is preheated before being introduced into the first thermal reactor, wherein preheating is carried out by bringing a heat exchanging fluid into a heat exchanging relationship with the raw material, while the heat exchanging fluid is cooled.

3. Method according to claim 2, wherein an exhaust gas is withdrawn from the first thermal reactor, said exhaust gas preferably containing at least 80 vol.% CO₂, and said exhaust gas is used as said heat exchanging fluid to preheat the raw material.

4. Method according to claim 3, wherein preheating the raw material comprises introducing the exhaust gas into a heat exchanger and preheating the raw material in said heat exchanger.

5. Method according to claim 2, wherein an exhaust gas is withdrawn from the first thermal reactor, said exhaust gas preferably containing at least 80 vol.% CO₂, and the heat exchanging fluid is heated by bringing the exhaust gas into a heat exchanging relationship with the heat exchanging fluid, while the exhaust gas is cooled.

6. Method according to any one of claims 2 to 5, wherein the cementitious material is introduced into a cooling device, in which the cooled exhaust gas or the cooled heat exchanging fluid is used to cool the cementitious material, while the cooled exhaust gas or the cooled heat exchanging fluid is re-heated.

7. Method according to claim 6, wherein the re-heated exhaust gas or heat exchanging fluid that is withdrawn from the cooling device is used to provide thermal energy to the first or second heat treatment, preferably by introducing the re-heated exhaust gas or heat exchanging fluid into the first or second thermal reactor.

8. Method according to claim 7, wherein the re-heated exhaust gas or heat exchanging fluid that is withdrawn from the cooling device is heated before being used for providing thermal energy to the first or second thermal reactor.

9. Method according to claim 7 or 8, wherein the re-heated exhaust gas or heat exchanging fluid that is withdrawn from the cooling device is introduced into the second thermal reactor to provide thermal energy to the second heat treatment and wherein the exhaust gas or heat exchanging fluid is withdrawn from the second thermal reactor and introduced into the first thermal reactor to provide thermal energy to the first heat treatment.

10. Method according to claim 9, wherein the exhaust gas or heat exchanging fluid that is withdrawn from the second thermal reactor is heated before being introduced into the first thermal reactor.

11. Method according to claim 8, 9 or 10, wherein the heating of the exhaust gas or the heat exchanging fluid gas is performed by means of a heating device that transforms electrical energy into thermal energy.

12. Method according to any one of claims 1 to 11, wherein the second thermal reactor is heated by electrical energy and/or by combusting a renewable fuel and/or by combusting hydrogen.

13. Method according to any one of claims 1 to 12, wherein the raw material consists of or comprises clay and/or a recycled concrete material and/or a recycled plasterboard material.
